# EUROPÄISCHE PATENTANMELDUNG

(11) **EP 0 721 003 A2**
(43) Veröffentlichungstag der Anmeldung: **10.07.1996**
(21) Anmeldenummer: 95117457.2
(22) Anmeldetag: 06.11.1995
(51) Int. Cl.: C09D 5/00, C09D 7/00

(54) **Wasserverdünnbares Strassenmarkierfarbensystem**

(30) Priorität: 08.11.1994 AT 2063/94
(71) Anmelder: Vianova Resins AG, A-8402 Werndorf (AT)
(72) Erfinder: Klintschar, Gerfried, Dr., A-8010 Graz (AT); Burkl, Julius, A-8053 Graz (AT)

(57) **Zusammenfassung**

Die Erfindung betrifft ein wasserverdünnbares Straßenmarkierfarbensystem, dessen Überfahrbarkeit durch die Zugabe von viskositätserhöhenden Substanzen beschleunigt wird.

Als viskositätserhöhende Substanzen werden Dispersionsverdicker, alkalische Stoffe, Isocyanate, kationische Polymere und mehrwertige Metallionen bildende Salze verwendet.

## Beschreibung

Die Erfindung betrifft ein wasserverdünnbares Straßenmarkierfarbensystem, dessen Überfahrbarkeit durch die Zugabe von viskositätserhöhenden Substanzen beschleunigt wird.

Wasserverdünnbare Straßenmarkierfarben sind umweltfreundlich und setzen sich in letzter Zeit mehr und mehr gegen Farben, welche in organischen Lösungsmitteln gelöst sind, durch.

Einer der wesentlichen Nachteile wasserverdünnbarer Straßenmarkierfarben ist die Abhängigkeit der Trocknungsgeschwindigkeit von der Luftfeuchtigkeit. Bei niedriger Luftfeuchtigkeit ist diese oft gleich rasch oder rascher als bei konventionellen Farben. Bei hohen Luftfeuchtigkeiten allerdings, wie sie z.B. am Morgen bzw. Abend, sowie vor oder nach Regenfällen auftreten, trocknen wasserverdünnbare Straßenmarkierfarben so langsam, daß eine ordnungsgemäße Markierung kaum möglich ist.

Eine Verbesserung dieser langsamen Trocknung wird beschrieben in der europäischen Patentanmeldung EP-A 0 409 459. Hierbei wird durch Senkung des pH-Wertes der applizierten Farbe infolge Verdunstung einer flüchtigen Base eine Überfahrbarkeit der Farbe erreicht, bevor das Lösungsmittel Wasser vollständig aus dem Film entwichen ist. Dieser Effekt wird augenscheinlich durch eine auftretende Koagulation der Dispersion erreicht. Die rasche Antrocknung der Farbe bringt die gravierenden Nachteile von Hautbildungen im Vorratsgefäß und Verstopfungen der Spritzdüsen mit sich.

In der europäischen Patentanmeldung EP-A 0 200 249 wird beschrieben, daß Straßenmarkierfarben nach ihrer Applikation mit Salzen in Kontakt gebracht werden, um eine rasche Trocknung zu erzielen. Auch hierbei ist der Effekt durch eine Koagulation erklärbar. Man ist bei diesem System auf die Verwendung von schwach stabilisierten Dispersionen eingeschränkt, die durch Zusatz von Salzen "ausgesalzen" (koaguliert) werden können. Das verwendete Salz muß als Lösung mitversprüht werden (Zweistoffdüse) oder nachträglich aufgestreut oder aufgesprüht werden. Im Fall des nachträglichen Aufbringens des Salzes in fester oder gelöster Form können erhebliche Anteile z.B. durch Regen weggewaschen werden und damit nicht mehr wirksam werden. Die durch Regen weggewaschene Salzmenge gelangt meist ins Grundwasser, daher ist diese Art der Verfestigung unerwünscht.

Es bestand daher die Aufgabe, Straßenmarkierfarbensysteme bereitzustellen, die unabhängig vom eingesetzten Bindemittel bereits nach kurzer Zeit überfahrbar sind. Dabei sollten die oben erwähnten Nachteile des Standes der Technik vermieden werden.

Überraschenderweise hat sich herausgestellt, daß eine Beschleunigung der Überfahrbarkeit einer wasser- verdünnbaren Straßenmarkierfarbe dadurch erzielt werden kann, daß die Farbe während oder unmittelbar nach der Applikation mit einem viskositätserhöhenden Mittel in Kontakt gebracht wird.

Die Erfindung betrifft demgemäß ein wasserverdünnbares Straßenmarkierfarbensystem, welches dadurch gekennzeichnet ist, daß während oder unmittelbar nach der Applikation der Straßenmarkierfarben in diese ein Mittel eingebracht wird, das deren Viskosität (gemessen bei einer Scherrate von 20 s⁻¹) auf mindestens das dreifache erhöht, vorzugsweise mindestens bis zur Konsistenz einer Spachtelmasse.

Da hierbei verschiedene Mechanismen der Viskositätserhöhung zur Verfügung stehen, ist man weitgehend unabhängig von der Art des Bindemittels bzw. man kann die zu jedem Bindemittel optimale Art der Viskositätserhöhung wählen.

Folgende Methoden einer Zugabe des genannten viskositätserhöhenden Mittels sollen hier beispielhaft genannt werden:
1) die Applikation des viskositätserhöhenden Mittels auf die Straße, bevor dann darauf die Markierung erfolgt,
2) die Einbringung des viskositätserhöhenden Mittels durch Vermischen mit der Straßenmarkierfarbe während der Applikation, beispielsweise in den Spritzstrahl,
3) die Aufbringung des viskositätserhöhenden Mittels auf die Oberfläche der frisch applizierten Farbe.

Der Aggregatzustand des viskositätserhöhenden Mittels kann flüssig oder fest sein. Wird das viskositätserhöhende Mittel auf die Oberfläche der frisch applizierten Farbe aufgebracht, kann dieser Vorgang bevorzugt zusammen mit dem Aufstreuen von Glasperlen, Griffigkeitsmitteln wie z.B. grober Sand und gegebenenfalls inerten Füllstoffen wie z.B. Sand, Quarzsand oder Kreide erfolgen. Es besteht auch die Möglichkeit, diese zuvor mit dem viskositätserhöhenden Mittel zu beschichten.

Die sich ergebende rasche Überfahrbarkeit einer derartigen Straßenmarkierfarbe dürfte damit erklärbar sein, daß die Viskositätserhöhung des Bindemittels zusammen mit dem hohen Anteil an Füllstoffen bereits vor Verdunstung des gesamten Wassers eine Konsistenz ergibt, welche ohne Beeinträchtigung überfahrbar ist. Eine meßbare Beschleunigung der Überfahrbarkeit kann bereits bei einer Viskositätserhöhung auf das dreifache, gemessen bei einer Scherrate von 20 s⁻¹, auftreten. Für die Praxis interessantere Ergebnisse erhält man bei stärkeren Viskositätserhöhungen, die mindestens die Konsistenz einer Spachtelmasse erreichen. Noch bessere Ergebnisse werden erzielt, wenn die Viskositätserhöhung bis zu einer fast trockenen, kittartigen Masse führt.

Gegenstand der Erfindung ist weiter ein Verfahren zum Aufbringen einer Straßenmarkierfarbe, bei dem durch Zusatz des viskositätserhöhenden Mittels eine hochviskose Masse gebildet wird, die das noch enthaltene Wasser langsam abgibt und sich dabei weiter verfestigt.

Bei den genannten Verfahren wird neben der Beschleunigung der Überfahrbarkeit im Regelfall auch jener Zeitpunkt rascher erreicht, bei dem eine Straßenmarkierfarbe nicht mehr vom Regen weggespült werden kann.

Folgende viskositätserhöhende Verfahren sollen hier beispielhaft genannt werden:
a) das Einbringen von Dispersionsverdickern, z.B. Acrylatverdickern oder Urethanverdickern in Straßenmarkierfarben,
b) das Einbringen alkalischer Stoffe in Straßenmarkierfarben, welche durch Gehalt eines pH-abhängigen Verdickers im alkalischen Bereich verdickbar sind,
c) das Einbringen alkalischer Stoffe in Straßenmarkierfarben, deren Bindemittel eine mit dem pH-Wert ansteigende Viskosität aufweist,
d) das Einbringen von Stoffen, welche in Wasser mehrwertige Metallionen bilden, in Straßenmarkierfarben mit säuregruppenhaltigen Bindemitteln,
e) das Einbringen von hochreaktiven Isocyanaten in Straßenmarkierfarben mit OH-gruppenhaltigen Bindemitteln,
f) das Einbringen von kationischen Polymeren in Straßenmarkierfarben mit säuregruppenhaltigen Bindemitteln.

Im Fall der Wahl der Möglichkeit d) zur Viskositätserhöhung wird im Rahmen der Erfindung lediglich beansprucht, die Stoffe, die in Wasser mehrwertige Metallionen bilden, entweder als Salz oder in Form einer Lösung direkt auf die Straßenoberfläche vor der Beschichtung mit der Straßenmarkierfarbe aufzubringen, oder das Salz, vorzugsweise über eine Lösung und nachfolgende Trocknung, auf Glasperlen, ein geeignetes Griffigkeitsmittel oder gegebenenfalls einen Füllstoff aufzuziehen. Durch diese Verfahrensvariante wird das Auswaschen des Salzes verhindert bzw. stark vermindert. Eine weitere geeignete Variante für das Einbringen von dissoziierenden Salzen mehrwertiger Metalle ist die Verwendung von inerten Bindemitteln als Vehikel für die Salze. Die inerten Bindemittel erfahren durch den Salzzusatz keine oder nur eine vernachlässigbare Viskositätsveränderung.

Je nach Wahl von geeigneten viskositätserhöhenden Mitteln, Applikationsverfahren und Bindemitteln kann die Überfahrbarkeit so rasch eintreten, daß eine Absperrung der Straße nicht unbedingt erforderlich ist. Dies gilt in verstärktem Maß für den Fall, daß die Farbe bei erhöhter Temperatur bis zu 100°C aufgespritzt wird. Bevorzugt wird die Farbe daher bei einer Temperatur von 30 bis 90°C, besonders bevorzugt zwischen 40 und 85°C aufgebracht.

Im Sinne der Erfindung kann bis auf die oben genannte Ausnahme jedes der genannten Zugabeverfahren (1) bis 3)) für die viskositätserhöhenden Mittel mit jedem der Mechanismen (a) bis f)) der Viskositätserhöhung kombiniert werden.

Die erfindungsgemäßen Straßenmarkierfarbensysteme lassen sich auf allen üblichen Untergründen, wie z.B. Asphalt und Beton aufbringen. Durch Zusatz von Farbpigmenten lassen sie sich problemlos einfärben.

Die nachstehenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

### Testmethode

Die Überfahrbarkeit wird nach der ASTM-Norm D 711-89 "Standard Test Method for No-Pick-Up Time of Traffic Paint" bestimmt. Hierbei läßt man eine Metallwalze mit Gummi-O-Ringen über die Straßenmarkierfarbe rollen. Der Zeitpunkt, bei dem keine Farbe mehr an den Ringen haftet, gilt als Zeitpunkt der Überfahrbarkeit.

### Beispiel 1

Eine Straßenmarkierfarbe wird nach folgendem Ansatz hergestellt und danach mit Wasser auf eine Spritzviskosität von 100 sec nach DIN 53211 eingestellt:
- 200 Teile: Bindemittel 1, 50 %ig (Dispersion aus Butylacrylat und Styrol, Säurezahl 0,5, Glasumwandlungstemperatur 16°C),
- 50 Teile: Wasser,
- 8 Teile: 2,2,4-Trimethyl-1,3-pentandiolmonoisobutyrat,
- 5 Teile: handelsübliches Antiabsetzmittel,
- 3 Teile: handelsübliches Netzmittel,
- 5 Teile: handelsüblicher Entschäumer,
- 3 Teile: Ammoniak conc.,
- 100 Teile: Rutilpigment,
- 200 Teile: Calciumcarbonat-Füllstoff, mittlere Korngröße 5 µm
- 200 Teile: Quarz-Füllstoff, mittlere Korngröße 10 µm.

Die Farbe wird auf zwei Glasplatten in einer Trockenschichtstärke von 250 µm gesprüht. Die Temperatur beträgt 22°C, die relative Luftfeuchte 40 %. Eine der Platten ist unmittelbar davor mit einem Acrylatverdicker in einer Auftragsmenge (naß) von 15 g/m² besprüht worden. Der Verdicker ist eine handelsübliche saure Copolymerisat-Dispersion auf Acrylsäurebasis mit einem pH-Wert von 3 und einem Feststoffgehalt von 30 %.

Die Überfahrbarkeit auf der unbehandelten Platte beträgt ca. 20 Minuten, auf der vorbehandelten Platte ca. 7 Minuten.

### Beispiel 2

Eine Straßenmarkierfarbe wird nach folgendem Ansatz hergestellt und danach mit Wasser auf eine Spritzviskosität von 100 sec nach DIN 53211 eingestellt:
- 250 Teile: Bindemittel 2, 40 %ig (Dispersion aus Butylacrylat und Styrol, Säurezahl 50, Glasumwandlungstemperatur 0°C),
- 50 Teile: Wasser,
- 8 Teile: 2,2,4-Trimethyl-1,3-pentandiolmonoisobutyrat,
- 5 Teile: handelsübliches Antiabsetzmittel,
- 3 Teile: handelsübliches Netzmittel,
- 5 Teile: handelsüblicher Entschäumer,
- 3 Teile: Ammoniak conc.,
- 100 Teile: Rutilpigment,
- 200 Teile: Calciumcarbonat-Füllstoff, mittlere Korngröße 5 µm
- 200 Teile: Quarz-Füllstoff, mittlere Korngröße 10 µm.

Die Farbe wird auf zwei Glasplatten in einer Auftragsmenge (naß) von 450 g/m² gesprüht. Die Temperatur beträgt 20°C, die relative Luftfeuchte 45 %. Eine der Platten ist unmittelbar davor mit einem kationischen Bindemittel in einer Auftragsmenge (naß) von 40 g/m² beschichtet worden. Das kationische Bindemittel ist ein flexibilisiertes Epoxidharz-Amin-Addukt mit einer Aminzahl von 110 mg KOH/g, 65%ig gelöst in Methoxypropanol.

Die Überfahrbarkeit auf der unbehandelten Platte beträgt ca. 28 Minuten, auf der vorbehandelten Platte ca. 11 Minuten.

### Beispiel 3

Eine Straßenmarkierfarbe wird nach folgendem Ansatz hergestellt und danach mit Wasser auf eine Spritzviskosität von 100 sec nach DIN 53211 eingestellt:
- 200 Teile: Bindemittel 3, 50 %ig (Dispersion aus Butylacrylat und Methylmethacrylat, Säurezahl 16, Glasumwandlungstemperatur 4°C, pH-Wert 3,6),
- 100 Teile: Wasser,
- 5 Teile: handelsüblicher saurer Phosphorsäureteilester als Netzmittel,
- 20 Teile: handelsüblicher Acrylatverdicker
- 5 Teile: handelsüblicher Entschäumer,
- 100 Teile: Rutilpigment,
- 200 Teile: Quarzsand, mittlere Korngröße 100 µm
- 200 Teile: Quarz-Füllstoff, mittlere Korngröße 10 µm.

Die Farbe wird auf zwei Glasplatten in einer Auftragsmenge (naß) von 430 g/m² gesprüht. Die Temperatur beträgt 21°C, die relative Luftfeuchte 43 %. Auf eine der frisch applizierten Flächen von Straßenmarkierfarbe wird eine Mischung im Gewichtsverhältnis von 4:1 von Glasperlen, mittlere Korngröße 300 µm und weißem Portlandzement in einer Auftragsmenge von 200 g/m² aufgestreut.

Die Überfahrbarkeit der unbehandelten Farbe beträgt ca. 38 Minuten, die der bestreuten Farbe ca. 10 Minuten.

### Beispiel 4

Eine Straßenmarkierfarbe wird nach folgendem Ansatz hergestellt und danach mit Wasser auf eine Spritzviskosität von 100 sec nach DIN 53211 eingestellt:
- 400 Teile: Bindemittel 4, 25 %ig (Sekundärdispersion aus Butylacrylat und Methylmethacrylat, Säurezahl 35, Glasumwandlungstemperatur 0°C),
- 3 Teile: handelsüblicher Entschäumer,
- 100 Teile: Rutilpigment,
- 200 Teile: Calciumcarbonat-Füllstoff, mittlere Korngröße 5 µm
- 200 Teile: Quarz-Füllstoff, mittlere Korngröße 10 µm.

Außerdem wird ein alkalisch beschichteter Quarzfüllstoff wie folgt hergestellt:
1000 g Quarzpulver mit einer durchschnittlichen Korngröße von 100 µm werden mit 200 g einer 20 %igen Lösung von Natriumhydroxid vermischt und die Mischung anschließend getrocknet.

Die Farbe wird auf zwei Probeflächen auf einer Straße mit Bitumendecke in einer Auftragsmenge (naß) von 400 g/m² gesprüht. Auf eine der Probeflächen wird während des Spritzvorgangs der oben beschriebene alkalisch beschichtete Quarzfüllstoff mit einer Auftragsmenge von 200 g/m² eingestreut. Die Temperatur beträgt 20° C, die relative Luftfeuchte 42 %.

Die Überfahrbarkeit der unbehandelten Farbe beträgt ca. 28 Minuten, die der während des Spritzvorgangs bestreuten Farbe ca. 10 Minuten.

### Beispiel 5

Eine Straßenmarkierfarbe wird nach folgendem Ansatz hergestellt und danach mit Wasser auf eine Spritzviskosität von 100 sec nach DIN 53211 eingestellt:
- 200 Teile: Bindemittel 5, 40 %ig (Dispersion aus Butylacrylat, Methylmethacrylat, Äthylacrylat, Hydroxyäthylacrylat, Acrylsäure und Styrol, Säurezahl 25, Glasumwandlungstemperatur 10°C),
- 50 Teile: Wasser,
- 8 Teile: 2,2,4-Trimethyl-1,3-pentandiolmonoisobutyrat,
- 5 Teile: handelsübliches Antiabsetzmittel,
- 3 Teile: handelsübliches Netzmittel,
- 5 Teile: handelsüblicher Entschäumer,
- 3 Teile: Ammoniak conc.,
- 100 Teile: Rutilpigment,
- 200 Teile: Calciumcarbonat-Füllstoff, mittlere Korngröße 5 µm
- 200 Teile: Quarz-Füllstoff, mittlere Korngröße 10 µm.

Außerdem werden mit Aluminiumsalz beschichtete Glasperlen wie folgt hergestellt:
1000 g Glasperlen mit einer durchschnittlichen Korngröße von 250 µm werden mit 250 g einer 20 %igen Lösung von kristallwasserhaltigem Aluminiumsulfat vermischt und die Mischung anschließend getrocknet.

Die Farbe wird auf zwei Glasplatten in einer Auftragsmenge (naß) von 400 g/m² gesprüht. Unmittelbar danach werden auf eine der frisch applizierten Flächen die oben beschriebenen, mit Aluminiumsulfat beschichteten Glasperlen in einer Auftragsmenge von 200 g/m² aufgestreut. Die Temperatur beträgt 9°C, die relative Luftfeuchte 91 %.

Die Überfahrbarkeit auf der unbehandelten Farbe beträgt ca. 180 Minuten, die der bestreuten Farbe ca. 22 Minuten.

### Beispiel 6

Eine Straßenmarkierfarbe wird nach folgendem Ansatz hergestellt und danach mit Wasser auf eine Spritzviskosität von 100 sec nach DIN 53211 eingestellt:
- 400 Teile: Bindemittel 4, 25 %ig (Dispersion aus Butylacrylat und Methylmethacrylat, Säurezahl 35, Glasumwandlungstemperatur 0°C),
- 3 Teile: handelsüblicher Entschäumer,
- 100 Teile: Rutilpigment,
- 200 Teile: Calciumcarbonat-Füllstoff, mittlere Korngröße 5 µm
- 200 Teile: Quarz-Füllstoff, mittlere Korngröße 10 µm.

Die Farbe wird auf zwei Probeflächen auf einer Straße in einer Auftragsmenge (naß) von 400 g/m² gesprüht. Während des Spritzvorgangs wird bei einer der Probeflächen eine Mischung von handelsüblichem Natronwasserglas (38 Bé, entspricht einer Dichte von 1,36 g/cm³) und Wasser im Massenverhältnis von 1:1 in einer Auftragsmenge von 23 g/m² in den Spritzstrahl eingesprüht. Die Temperatur bei diesem Beispiel beträgt 10°C, die relative Luftfeuchtigkeit ist 60 %. Die Überfahrbarkeit der unbehandelten Farbe beträgt ca. 200 Minuten, die der behandelten Farbe ca. 25 Minuten.

## Patentansprüche

1. Wasserverdünnbares Straßenmarkierfarbensystem, dadurch gekennzeichnet, daß während oder unmittelbar nach Applikation der Straßenmarkierfarbe in diese ein Mittel eingebracht wird, welches deren Viskosität, gemessen bei einer Scherrate von 20 s⁻¹ , auf mindestens das Dreifache erhöht, vorzugsweise bis mindestens zur Konsistenz einer Spachtelmasse.

2. Wasserverdünnbares Straßenmarkierfarbensystem nach Anspruch 1, dadurch gekennzeichnet, daß das viskositätserhöhende Mittel ein Dispersionsverdicker ist.

3. Wasserverdünnbares Straßenmarkierfarbensystem nach Anspruch 1, dadurch gekennzeichnet, daß das viskositätserhöhende Mittel ein alkalischer Stoff ist, und die Straßenmarkierfarbe einen pH-abhängigen Verdicker enthält.

4. Wasserverdünnbares Straßenmarkierfarbensystem nach Anspruch 1, dadurch gekennzeichnet, daß das viskositätserhöhende Mittel ein alkalischer Stoff ist, und die Straßenmarkierfarbe ein Bindemittel enthält, dessen Viskosität mit dem pH-Wert ansteigt.

5. Wasserverdünnbares Straßenmarkierfarbensystem nach Anspruch 1, dadurch gekennzeichnet, daß das viskositätserhöhende Mittel ein Isocyanat ist und die Straßenmarkierfarbe ein hydroxylgruppenhaltiges Bindemittel enthält.

6. Wasserverdünnbares Straßenmarkierfarbensystem nach Anspruch 1, dadurch gekennzeichnet, daß das viskositätserhöhende Mittel ein kationisches Polymer ist und die Straßenmarkierfarbe ein säuregruppenhaltiges Bindemittel enthält.

7. Wasserverdünnbares Straßenmarkierfarbensystem nach Anspruch 1, dadurch gekennzeichnet, daß das viskositätserhöhende Mittel sich unter Bildung mehrwertiger Metallionen in Wasser löst und die Straßenmarkierfarbe ein säuregruppenhaltiges Bindemittel enthält, wobei das viskositätserhöhende Mittel vor der Applikation mit einem weiteren Bindemittel vermischt wird, dessen Viskosität nicht oder nicht wesentlich durch dieses Mittel verändert wird.

8. Wasserverdünnbares Straßenmarkierfarbensystem nach Anspruch 1, dadurch gekennzeichnet, daß das viskositätserhöhende Mittel sich unter Bildung mehrwertiger Metallionen in Wasser löst und die Straßenmarkierfarbe ein säuregruppenhaltiges Bindemittel enthält, wobei das Aufbringen des viskositätserhöhenden Mittels entweder direkt auf die Straßenoberfläche vor der Applikation der Straßenmarkierfarbe, oder aufgezogen auf Glasperlen, ein inertes Griffigkeitsmittel und/oder einen inerten Füllstoff auf die Straßenmarkierfarbe unmittelbar nach deren Applikation erfolgt.

9. Wasserverdünnbares Straßenmarkierfarbensystem nach Anspruch 1 bis 7, dadurch gekennzeichnet, daß das viskositätserhöhende Mittel vor der Applikation der Straßenmarkierfarbe auf die Straße aufgebracht wird.

10. Wasserverdünnbares Straßenmarkierfarbensystem nach Anspruch 1 bis 7, dadurch gekennzeichnet, daß das viskositätserhöhende Mittel bei der Applikation der Straßenmarkierfarbe mit dieser vermischt wird.

11. Wasserverdünnbares Straßenmarkierfarbensystem nach Anspruch 1 bis 7, dadurch gekennzeichnet, daß das viskositätserhöhende Mittel unmittelbar nach Applikation der Straßenmarkierfarbe auf diese aufgebracht wird.

12. Wasserverdünnbares Straßenmarkierfarbensystem nach Anspruch 11, dadurch gekennzeichnet, daß das viskositätserhöhende Mittel zusammen mit Glasperlen, Griffigkeitsmitteln und/oder inerten Füllstoffen auf die Straßenmarkierfarbe aufgebracht wird.

13. Wasserverdünnbares Straßenmarkierfarbensystem nach Anspruch 12, dadurch gekennzeichnet, daß Füllstoffe und/oder Griffigkeitsmittel mit dem viskositätserhöhenden Mittel zuvor beschichtet werden.

14. Wasserverdünnbares Straßenmarkierfarbensystem nach Anspruch 1 bis 13, dadurch gekennzeichnet, daß die Straßenmarkierfarbe mit einer erhöhten Temperatur bis 100°C gespritzt wird.

15. Verfahren zum Beschleunigen der Überfahrbarkeit von Straßenmarkierfarben, dadurch gekennzeichnet, daß ein viskositätserhöhendes Mittel nach einem der Ansprüche 2 bis 7 während oder unmittelbar nach der Applikation der Farbe mit dieser in Kontakt gebracht wird.

16. Verfahren zum Markieren von Straßen, dadurch gekennzeichnet, daß ein Straßenmarkierfarbensystem gemäß einem der Ansprüche 1 bis 14 verwendet wird.
